# EUROPEAN PATENT APPLICATION

(11) **EP 4 573 914 A1**
(43) Date of publication of application: **25.06.2025**
(21) Application number: 23219242.7
(22) Date of filing: 21.12.2023
(51) Int. Cl.: A22C 25/04, A22C 25/14

(54) **GUTTING SYSTEM AND METHOD WITH TRAPDOOR IN INCLINED SURFACE**

(71) Applicant: Marel Iceland EHF, 210 Gardabaer (IS)
(72) Inventor: SIGURGEIRSSON, Jón Vidar, 210 Gardabaer (IS); GUDLAUGSSON, Haraldur, 210 Gardabaer (IS); MAGNÚSSON, Sigurður Þór, 210 Gardabaer (IS); OLSEN, Árni Hrafn, 210 Gardabaer (IS)
(74) Representative: Inspicos P/S

(57) **Abstract**

There is presented a gutting system (100) comprising a dual gutting device (110) and an infeed system (130) for the dual gutting device comprising a fish input region (132), a plurality of fish output regions (134a-b), a conveying system (136) for conveying fish from the input region to the plurality of output regions, wherein the conveying system comprises a conveying surface (138) comprising an inclined surface arranged for conveying fish received at the input region, one or more trapdoors (140) arranged in the inclined surface, wherein the conveying system is arranged to convey fish received at the input region to the one or more trapdoors, and wherein the conveying system is arranged so that the configuration of the one or more trapdoors determines which output region the fish are conveyed to, the system furthermore comprising a controller arranged for controlling the configuration of the one or more trapdoors, wherein the dual gutting device and the infeed system is arranged so that for each gutting device, there is an output region arranged for providing fish to the conveying arrangement of said gutting device, such as to an input end of the conveying arrangement of said gutting device. There is furthermore presented a corresponding method and use.

## Description

### FIELD OF THE INVENTION

The present invention relates to a fish processing system, and more particularly to a gutting system for gutting fish and a corresponding method and use.

### BACKGROUND OF THE INVENTION

Gutting of fish may be carried out manually or in an automated manner using a gutting device for gutting fish. It may generally be advantageous to increase capacity of gutting (such as increasing the number of gutted fish, such as salmon of 2-11 kg, per time unit) while maintaining - or even increasing - gutting quality, yet this may be challenging since increasing speed of gutting, such minimizing the time for gutting an individual fish, may negatively affect gutting quality. Another possible issue may be a challenge in providing or feeding fish at sufficient rate and/or at the correct positions for initiating the gutting process. Yet another possible issue may be that a gutting system (or parts thereof, such as an infeed system for providing fish, e.g., at a gutting device and/or a gutting machine) may be complicated, costly and/or take up a large amount of space, such as take up a large volume and/or footprint.

Hence, an improved gutting system for gutting fish, and a corresponding method and use, would be advantageous, and in particular, an improved gutting system, method and use, which enables increasing, such as optimizing, capacity, while maintaining or improving gutting quality, and/or which enables reducing, such as minimizing, complexity, cost and/or space demands, such as footprint, of the gutting system, such as of an infeed system of the gutting system.

### SUMMARY OF THE INVENTION

It may be seen as an object of the present invention to provide a gutting system for gutting fish, and a corresponding method and use, which overcomes the problems mentioned above.

It may be a further object of the present invention to provide an alternative to the prior art.

Thus, the above-described object and several other objects are intended to be obtained in a first aspect of the invention by providing a gutting system, wherein the gutting system comprises:
a. a gutting machine, wherein the gutting machine comprises a plurality of gutting devices, each gutting device being arranged for gutting fish and comprising:
   i. a conveying arrangement, wherein the conveying arrangement is arranged for conveying fish,
   ii. a gutting arrangement, wherein the gutting arrangement is arranged for gutting fish conveyed by the conveying arrangement,
b. an infeed system for the gutting machine, wherein the infeed system comprises:
   i. an input region, wherein fish can be provided to the infeed system,
   ii. a plurality of output regions, wherein at each output region, fish, which has been received at the input region of the infeed system, can be provided from the infeed system,
   iii. a conveying system for conveying fish from the input region to the plurality of output regions, wherein the conveying system comprises:
      1. a conveying surface comprising an inclined surface, wherein the conveying surface is arranged for conveying fish received at the input region, such as under the influence of gravity and due to an inclination of the inclined surface, such as conveying fish from the input region to the plurality of output regions,
      2. one or more trapdoors, wherein the one or more trapdoors are arranged in the inclined surface, wherein the conveying system is arranged to convey fish received at the input region to the one or more trapdoors, and wherein the conveying system is arranged so that the configuration of the one or more trapdoors determines which output region the fish are conveyed to,
c. a controller, wherein the controller is arranged for controlling the configuration of the one or more trapdoors,
wherein the gutting machine and the infeed system are arranged, such as arranged relative to each other, so that for each gutting device, there is an output region arranged for providing fish to the conveying arrangement of said gutting device, such as to an input end of the conveying arrangement of said gutting device.

A possible advantage of the present invention is that it enables increasing the capacity of a gutting machine with respect to the capacity of a single gutting device, such as by a factor from unity and potentially up the number of gutting devices in the plurality of gutting devices, e.g., by maintaining the gutting speed of the individual gutting machines (such as maintaining quality while multiplying capacity). Such increase in capacity may be provided without a corresponding significant increase of the footprint of the machine, e.g., due to the plurality of gutting devices sharing a frame and/or a cabinet, which may enable arranging them close together and possibly additionally save on materials.

Another possible advantage may be that an increase in the quality of gutting can be provided without compromising capacity or even with increasing capacity. For example, increasing a gutting speed - and hence capacity - of a single gutting device may decrease gutting quality. Similarly, decreasing gutting speed - and hence capacity - of a single gutting device may increase gutting quality. There thus appears to be a trade-off between speed - and hence capacity - and quality for a single gutting device. By providing a gutting machine comprising a plurality of gutting devices, such as with *n* gutting devices, wherein *n* is a positive integer larger than 1, it may be possible to increase quality without compromising capacity (e.g., by decreasing speed *v1* of each gutting device by a factor of *n* with respect to an original speed *v0*), or even increasing both quality and capacity (e.g., by reducing speed to a speed *v1* within the interval ]*v0*/n; *v0*[, wherein *v0* is an original speed, such as reducing speed *v1* to an interval from the original speed *v0* divided by the number *n* of gutting devices to the original speed *v0,* or in another formulation to a speed *v1* within 100 %/n-100 % of the original speed *v0* with both endpoints excluded), so as to both increase capacity and decrease gutting speed of the individual gutting devices (and hence possibly increase gutting quality).

A capacity of the gutting machine may be measured in fish/minute (wherein the fish is preferably salmon of 2-11 kg), such as at least 10 fish/minute, such as at least 15 fish/minute, such as at least 20 fish/minute, such as at least 25 fish/minute, such as 25 fish/minute or more than 25 fish/minute, such at least 30 fish/minute, such as at least 40 fish/minute, such as 50 fish/minute or more.

Another possible advantage may be that by having an infeed system with an inclined (conveying) surface and one or more trapdoors, a reduced space demand, such as footprint may be realized. By having an inclined (conveying) surface, more fish may be conveyed along the same footprint (such as an area projected onto a horizontal surface). For example, a factor of cosine to the angle of inclination with respect to horizontal may be gained (as a reduction in footprint). Furthermore, by having trapdoors, less footprint may be necessary because the trapdoor allows vertical movement of the fish, i.e., dispensing with a need for moving the fish horizontally, which would otherwise require a larger footprint. Still further, by relying on an inclined conveying surface and one or more trapdoors, gravity can be relied on as a driving force, which dispenses with a need for costly, complicated and space demanding motors or actuators. Another possible advantage of the combination of one or more trapdoors and inclined surface may be that it enables having a relatively low number of trapdoors, e.g., compared to a conveyor belt with bins with a trapdoor in each bin. Another possible advantage may be that by having an inclined surface, it is possible to convey single fish individually, e.g., as opposed to a conveyor belt, where all fish move at the speed of the conveying belt. Another possible advantage highlighting the synergistic effect of having one or more trapdoors in an inclined surface is that it may reduce a change in conveying direction for fish being led through a trapdoor under the action of gravity, because the inclination has already given the velocity of the conveyed fish a vertical component (as opposed to fish being conveyed on a horizontal surface).

Another possible advantage may be that due to enabling benefitting from gravity (due to the inclined surface and the one or more trapdoors) as a driving force, moving parts may be dispensed with, which may in turn be beneficial for reducing contamination, costs, space demand, such as footprint, and/or complexity.

'Gutting' is understood to mean - in the context of the present invention - fish gutting which is a term common in the art, such as synonymous with (fish) disembowelment and/or (fish) evisceration. Gutting may be understood to be the removal (optionally at least partially by suction) of some or all of the organs of the gastrointestinal tract (bowels or viscera), optionally through an incision made across the abdominal area.

'Fish' are understood as is common in the art. It may furthermore be understood that there may be substantial differences in anatomy, including size, between fish and other animals, such as pork, cattle, poultry etc. For instance, mammals have a diaphragm and a thick skirt that have to be cut in addition to the bung (anal vent) and the connections to the head. A gutting tool for gutting other animals may hence not be suitable for gutting fish.

In embodiments, the fish originate from fish within the orders of salmoniformes, scombriformes (such as from the tribe thunnini) or gadiformes, such as are items of any group of trout, salmon, cod, haddock, and tuna, such as preferably salmon.

The weight of individual fish may be within (i.e., with both endpoints excluded) 1-15 kg, such as preferably within 2-11 kg, such as more preferably within 3-8 kg.

By 'gutting system', 'gutting machine', 'gutting device' and/or 'device being arranged for gutting' may be understood any element or combination of elements arranged for gutting of fish in a partially or fully automated manner, which may comprise a processor for controlling the gutting system/machine/device, sensors for obtaining information of, e.g., the fish (such as position, orientation, size and/or anatomy), and actuators, e.g., for operating a gutting arrangement, such as a gutting arrangement comprising gutting tools and peripheral tools, such as measuring devices, such as scanners, etc.

It is hereby understood that the term 'gutting system' refers to a fish gutting system and that the terms 'gutting system' and 'fish gutting system' have - in the context of the present invention - exactly the same meaning and can be used interchangeably.

The plurality of gutting devices may be arranged adjacent to each other and/or within a single cabinet and/or on a single frame (such as for the purpose of reducing the materials and/or space required relative to two independent gutting devices).

By 'gutting arrangement' may be understood any arrangement for gutting fish, such as for gutting fish on a conveying arrangement. The gutting arrangement may comprise one or more gutting tools and optionally additionally peripheral tools, such as equipment (such as x-ray imaging devices, photocells, 2D scanners and 3D scanners) for detecting a presence, position and/or size of fish and optionally furthermore a position, size and/or shape of structures of the fish, such as an abdominal roof.

By 'gutting tool' may be understood any tool for gutting, such as, e.g., an abdominal opening device, a scraper, a rasper, a knife, or a suction nozzle. A 'gutting tool' may be understood as a tool for interacting physically with the fish and optionally changing the fish, such as cutting the fish and/or removing parts of the fish.

The gutting tools may comprise gutting tools as described in WO2016/138945A1, which is hereby included by reference in its entirety. Especially, FIGS. 1-3 and the accompanying description of WO2016/138945A1 are of particular relevance and are hereby included by reference.

According to an embodiment there is presented a gutting device for gutting fish wherein the one or more gutting tools comprising one or more tools selected from the group comprising an abdominal opening device, a scraper, a rasper, a knife, and a suction nozzle.

By 'conveying arrangement' may be understood any arrangement or means for conveying the fish, such as a belt conveyor. Alternatively, or additionally, the conveying arrangement may comprise or be a chain conveyor, a screw conveyor or a vibrating conveyor. Conveying arrangements in separate gutting devices may be understood to be distinct and separate from each other, such as forming separate tracks or lanes and/or enabling conveying distinct, separate streams of fish.

By 'infeed system' may be understood a system for receiving fish at an input region and conveying the fish within the infeed system and distributing the fish to a plurality of output regions, where the fish are provided.

The 'input region' may be understood as a single input region (such as wherein the received fish are not provided in a separate manner). For example, the input region can be provided with a single stream of fish.

The 'output regions' may be understood to be spatially distinct regions, such as where the infeed system enables taking a single input stream at the input region and provides or outputs a plurality of output streams at the plurality of output regions.

The 'conveying system' (of the infeed system) may be understood to be a conveying system, which relies at least partially, such as completely, on gravity as a driving force via the inclined surface.

By 'conveying surface' may be understood a surface supporting the fish during conveying within the infeed system. The conveying surface comprises, such as consists of, an inclined surface or a plurality of inclined surfaces, such as enabling conveying the fish by means of gravity (such under the influence of gravity and a normal force from the conveying surface).

By 'inclined surface' may be understood that the surface is non-horizontal, such as having a normal vector making a smallest angle with vertical of at least 1°, such as at least 2°, such as at least 5°, such as at least 10°, such as at least 20°, such as at least 25°, such as at least 30°, such as at least 45°. It may be understood that for the purpose of determining a normal vector, a part of the surface, such as a circle with a diameter of at least 1 cm, such as at least 2 cm, such as at least 5 cm, such as at least 10 cm, such as at least 20 cm, such as at least 30 cm, must be approximated with a planar surface (such as for the purpose of providing a relevant average, such as averaging out noise). The inclined surface may have a sufficient inclination, e.g., taking into account friction, for allowing fish, such as salmon of 2-11 kg to slide exclusively under the action of gravity, such as from the input region to the output regions.

'Trapdoor' is to be understood as is common in the art, such as a door/gate/hatch for controllably allowing (or not allowing) fish to move (under the action of gravity) in a direction being non-parallel with the conveying direction (where conveying direction is in the present context is understood as a conveying direction with the trapdoor being in a closed configuration), such as in a direction being parallel with a gravitational force vector. The trapdoor may preferably be a door/gate/hatch in a supporting surface of the infeed system. When the trapdoor is in an open configuration, it may leave behind a throughgoing hole in the conveying surface.

In case of a plurality of trapdoors, the trapdoors may be sequentially arranged, e.g., so that the if the fish passes the first trapdoor, it can be led further downstream to the next trapdoor and so forth.

By 'controller' may be understood any means, such as a (optionally digital) processor, for controlling the configuration of the one or more trapdoors, and optionally further elements, such as gutting devices (e.g., more specifically gutting arrangements (such as gutting tools) and/or conveying arrangements), optionally via actuators.

According to an embodiment there is presented a gutting system, wherein at least one trapdoor presents an inclined face in a closed configuration, wherein said inclined face in the closed configuration is arranged for supporting and/or conveying fish, such as conveying fish towards a downstream output region.

By 'inclined face' may be understood a surface of the trapdoor, such as a surface being a supporting and/or conveying surface when the trapdoors is in a closed configuration, such as wherein the inclined face enables conveying the fish further downstream and/or supporting a stationary fish for later being conveyed further downstream or lead through the trapdoor upon opening.

A possible advantage of this embodiment may be that the inclination of the inclined face enables that a fish which is stopped at the trapdoor, such as stopped by a gate, can start moving again, such as exclusively under the action of gravity, e.g., in case a gate is opened. This may enable keeping a fish stationary at a trapdoor so that it is ready for being led (within a short time) through the trapdoor or being conveyed further downstream. Another possible advantage may be that the inclination may go to ensure that a fish at the trapdoor is in a well-defined position, e.g., if it is held stationary by means of a gate, namely at the most downstream position allowable by the gate.

According to an embodiment there is presented a gutting system, wherein at least one trapdoor is arranged so that a fish can be positioned on the trapdoor when the trapdoor is in a closed configuration, and so that changing the configuration of the trapdoor from a closed configuration to an open configuration entails conveying the fish, such as the fish originally positioned on the trapdoor in the original closed configuration, through the trapdoor upon opening.

This may be in contrast with, e.g., a slowly moving horizontal trapdoor, where a fish may simply remain on the trapdoor upon opening.

A possible advantage of this embodiment may be that it enables leading the fish through the trapdoor solely by opening the trapdoor. Another possible advantage may be that it enables putting a fish in a position on the trapdoor ready for being swiftly led through the trapdoor, which may in turn be beneficial for exploiting a capacity of a downstream gutting device.

According to an embodiment there is presented a gutting system, wherein the infeed system comprises at least two trapdoors and three output regions including:
- a first output region arranged for providing fish to a conveying arrangement of a first gutting device, and
- a second output region arranged for providing fish to a conveying arrangement of a second gutting device.

The trapdoors may be sequentially arranged, e.g., so that the if the fish passes the first trapdoor, it can be led further downstream to the second trapdoor.

A possible advantage of this embodiment may be that it enables providing fish to at least two gutting devices and another output region, such as reject conveyor or a reject bin.

According to an embodiment there is presented a gutting system, wherein the at least three output regions are further comprising:
- a third output region arranged for providing fish at a region external to the gutting machine, such as a region for rejected fish and/or for fish to be recirculated, such as for providing fish into a reject device or into the infeed system, such as into a reject bin or onto a reject conveyor or back into the infeed system.

By 'a region external to the gutting machine' may be understood a region not leading to the one or more gutting devices of the gutting machine. It might be beneficial to bring fish to a reject device, e.g., in case the fish is determined to have one or more unsatisfactory characteristics (e.g., unsatisfactory size, disease, contamination and/or quality), or to bring the fish (back) to the infeed system (e.g., in case the fish was merely incorrectly oriented, but otherwise fit for gutting).

A possible advantage of this embodiment may be that it enables gutting only fish that should be gutted, such as fish suitable for gutting, while rejecting other fish, such as fish unsuitable for gutting (e.g., due to size, disease, contamination, quality or other issues causing rejection due to the fish being unsuitable for gutting) and/or fish to be rejected (or fed back into the infeed) for other reasons(e.g., due to an inappropriate orientation of the fish, where it is noted that inappropriate orientation, such as fish being oriented as to end up in a prone position in the gutting device, which may lead to the fish being damaged to a point that they need to be discarded).

According to an embodiment there is presented a gutting system, wherein an output region is given by a downstream end of the infeed system, such as wherein the downstream end is arranged so that fish can slide over the edge of the downstream end and be driven by gravity to be brought to a conveying arrangement, such as an input end of said conveying arrangement.

A possible advantage of this embodiment may be that an output region is provided in an efficient manner, such a simply being an end of the conveying system.

According to an embodiment there is presented a gutting system, wherein the infeed system comprises one or more gates, wherein each gate is controllable by the controller so as to be in an open configuration or a closed configuration, wherein
- in the closed configuration the gate is blocking fish being supported by the inclined surface of the infeed system from passing the gate, and
- in an open configuration the gate is allowing fish being supported by the inclined surface of the infeed system to pass the gate.

By 'gate' may be understood a door/gate/hatch for controllably allowing (or not allowing) fish to move - optionally under the action of gravity in combination with a normal force - in a direction being parallel with the conveying direction, such as in a direction being parallel with a conveying surface of the infeed system, optionally including a trapdoor in a closed configuration. The gate may preferably be a door/gate/hatch placed above a conveying surface of the infeed system.

A possible advantage of this embodiment may be that the gate enables stopping fish, such as selectively stopping individual fish. This may increase a chance, such as ensure, that a fish goes through a certain trapdoor (in an open configuration), such as a trapdoor at the gate or immediately in front of the gate (such as so that a fish stopped by the gate is on the trapdoor). This may in turn enable decreasing a size of the opening of the trapdoor, which may be beneficial for reducing a footprint of the infeed system. Another possible advantage may be that such gate may be beneficial for keeping fish separate, e.g., by holding one fish back, while a preceding fish is being led to a downstream gutting device. Another possible advantage may be that by stopping individual fish, the gate may control a separation in space/and or time between fish (e.g., in contrast with fish being conveying by a belt conveyor).

According to an embodiment there is presented a gutting system, wherein one or more gates within the one or more gates are each arranged at a trapdoor, such as at each trapdoor, so that when a fish is blocked from passing such a gate by such a gate being in a closed configuration, the fish is positioned at said trapdoor so that it can pass through the trapdoor if the trapdoor is in an open configuration and/or changes from a closed configuration to an open configuration.

A possible advantage of this embodiment may be that it enables keeping fish ready for being led to a gutting device, which in turn means that a gutting device can be provided with a fish almost instantly when it is ready for gutting, which is beneficial for ensuring a high capacity.

Another possible advantage may be that it enables that the fish is kept stationary, such as stationary at a well-defined position and/or orientation, which may be beneficial for controlling the position and/or orientation of the fish being provided from the output region, such as onto a conveying arrangement of a gutting device.

According to an embodiment there is presented a gutting system, wherein one or more gates within the one or more gates are arranged upstream and/or downstream of a trapdoor, such as at each trapdoor, so that when a fish is blocked from passing such a gate by such a gate being in a closed configuration, the fish is not positioned at the trapdoor, such as in the sense that it can pass through the trapdoor even if the trapdoor is in an open configuration.

A possible advantage of this embodiment may be that such gates can be beneficial for buffering, such as for keeping (optionally individual) fish ready for being conveyed downstream.

According to an embodiment there is presented a gutting system, wherein the one or more gates comprise:
- a first gate which is arranged upstream of a first trapdoor so that when a fish is blocked from passing the first gate by the first gate being in a closed configuration, the fish is positioned upstream with respect to the first trapdoor, such as in the sense that it cannot pass through the first trapdoor even if the first trapdoor is in an open configuration,
- a second gate which is arranged at the first trapdoor so that when a fish is blocked from passing the second gate by the second gate being in a closed configuration, the fish is positioned at the first trapdoor, so that it can pass through the first trapdoor if the first trapdoor is in an open configuration, and
- a third gate which is arranged downstream of a first trapdoor so that when a fish is blocked from passing the third gate by the third gate being in a closed configuration, the fish is positioned downstream with respect to the first trapdoor, such as in the sense that it cannot pass through the first trapdoor even if the first trapdoor is in an open configuration.

A possible advantage of this embodiment may be that it enables both buffering (individual) fish and keeping fish ready at a trapdoor.

According to an embodiment there is presented a gutting system, wherein
- a conveying direction of each conveying arrangement is arranged for being substantially parallel or anti-parallel, such as parallel or anti-parallel, with a longitudinal axis of the fish.

By 'longitudinal axis of the fish' may be understood a direction parallel with a longest dimension of the fish and/or an anteroposterior axis. The fish are optionally oriented with an inferior and/or caudal direction being parallel with a conveying direction and a superior and/or cranial position being arranged antiparallel with a conveying direction, such as being conveying with the tail - if present - pointing in the conveying direction), and preferably in a supine position.

By 'substantially parallel or anti-parallel' may be understood that a smallest angle between a conveying direction and a longitudinal axis is less than 45°, such as less than 30°, such as less than 20°, such as less than 10°, such as less than 5°, such as less than 2°.

A possible advantage of this embodiment may be that it simplifies moving the gutting tools along the longitudinal axis of both fish and along a conveying direction. Additionally, if the fish are in a supine position, the gutting tools can be moved into and out of the fish from above (such as in anterior and/or posterior directions, optionally in a sagittal plane) and perform the gutting process in a controlled manner without gravity uncontrollably pulling out organs and body fluids.

According to an embodiment there is presented a gutting system, wherein
- a conveying direction of the conveying system, is arranged for being non-parallel with a longitudinal axis of the fish, such as wherein a smallest angle between a longitudinal angle of the fish being at least 10°, such as at least 30°, such as at least 45°, such as at least 60°, such as at least 75°.

A possible advantage of this embodiment may be that it enables keeping a length of the infeed system short.

According to an embodiment there is presented a gutting system, wherein the plurality of gutting devices are substantially encircled (such as encircled), such as substantially enclosed (such as enclosed), by a single cabinet and/or mounted on a single frame.

This may be advantageous for reducing the materials and/or space required relative to two independent gutting devices.

By 'encircled' may be understood that an element is around another element, such as 360°, e.g., as observed when looking along one dimension.

By 'enclosed' may be understood that an element is around another element, such as a solid angle of 4π, e.g., such as the enclosing element is seen in any direction as observed from the enclosed element.

According to an embodiment there is presented a gutting device for gutting fish furthermore comprising a fish measuring device for obtaining fish specific data.

This may be advantageous for obtaining fish specific data, which may be advantageous for optimizing a gutting process, such as increasing speed, utilization of the raw material and/or quality of the gutting process. For example, the fish measuring device may be arranged upstream of the one or more trapdoors, and the controller may be arranged or receiving information from the fish measuring device, such as fish specific data, and may furthermore be arranged for controlling the one or more trapdoors at least partially based on information received from said fish measuring device.

The 'fish specific data' may be any data relating to the specific fish, such as data relating to a position, orientation, type and/or anatomy, such as position and/or size of structures within the fish (e.g., abdominal roof and/or anal vent), of the fish, such as an estimate of the position of the abdominal roof of the fish.

The 'fish measuring device' may be any device(s) capable of yielding those data, such as x-ray imaging devices, photocells, 2D scanners and 3D scanners.

According to a second aspect of the invention, there is presented use of a gutting system according to the first aspect.

According to a second aspect of the invention, there is presented a method for gutting fish, optionally by means of a gutting system according to the first aspect, said method comprising:
1. providing fish at an input region of an infeed system for a gutting system,
2. conveying the fish by means of gravity via an inclined surface of the infeed system to a trapdoor of the infeed system,
3. controlling a configuration of the trapdoor so as to determine
   i. if the trapdoor is in an open configuration so that the fish goes through the trapdoor to a conveying arrangement of a first gutting device of the gutting system, whereafter the method is further comprising gutting the fish on the conveying arrangement of the first gutting device with a gutting arrangement of the first gutting device, or
   ii. if the trapdoor is in a closed configuration so that the fish passes the trapdoor and is conveyed via an inclined surface of the infeed system to a conveying arrangement of a second gutting device of the gutting system, whereafter the method is further comprising gutting the fish on the conveying arrangement of the second gutting device with a gutting arrangement of the second gutting device.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The system, method and use according to the invention will now be described in more detail with regard to the accompanying figures. The figures show one way of implementing the present invention and is not to be construed as being limiting to other possible embodiments falling within the scope of the attached claim set.
FIG. 1 shows a perspective view of a gutting system,
FIG. 2 shows an end view of the infeed system,
FIG. 3 shows a top view of the infeed system, and
FIG. 4 shows a flow-chart illustrating a method for gutting fish.

### DETAILED DISCLOSURE OF THE INVENTION

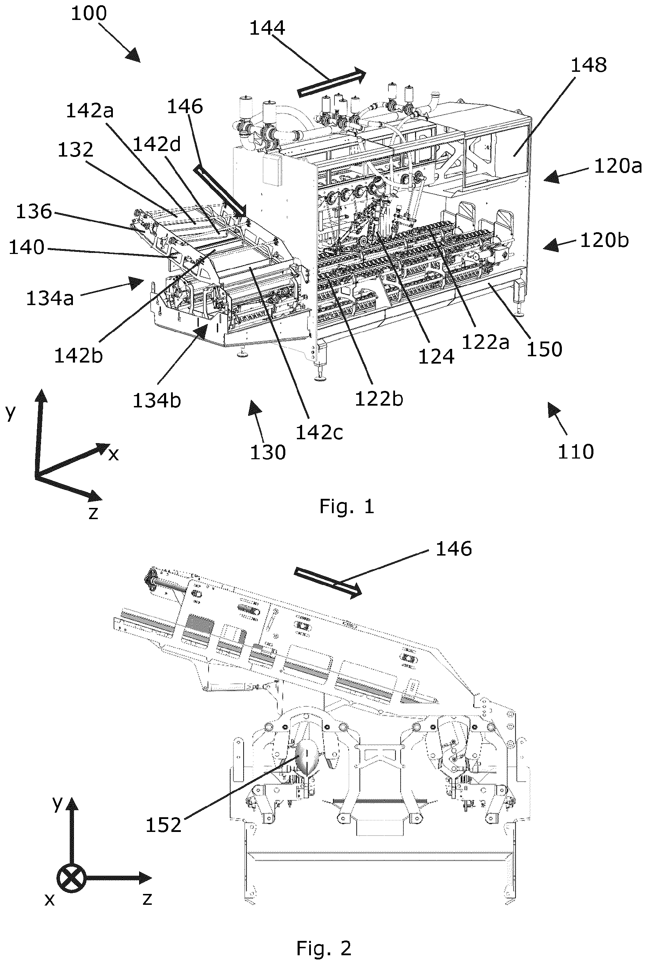

FIG. 1 shows a perspective view of a gutting system 100, wherein the gutting system comprises:
- A gutting machine 110, wherein the gutting machine comprises a plurality of gutting devices 120a-b (shown in the figure to be similar and displaced with respect to each other only in the z-direction), each gutting device being arranged for gutting fish and comprising:
   i. a conveying arrangement 122a-b (shown in the figure to be endless belt conveyors being arranged parallel to each other in the two gutting devices), wherein the conveying arrangement is arranged for conveying fish,
   ii. A gutting arrangement 124 (comprising a plurality of gutting tools), wherein the gutting arrangement is arranged for gutting fish conveyed by the conveying arrangement,
- An infeed system (130) for the gutting machine, wherein the infeed system comprises:
   i. An input region 132 (which is simply a top area of a conveying surface in the present embodiment), wherein fish can be provided to the infeed system,
   ii. A plurality of output regions 134a-b (comprising a first output region 134a at trapdoor 140 and a second output region 134b at an end of the conveying surface), wherein at each output region, fish, which has been received at the input region of the infeed system, can be provided from the infeed system,
   iii. A conveying system 136 (which the present embodiment is a planar surface comprising planar plates including a trapdoor 140) for conveying fish from the input region to the plurality of output regions, wherein the conveying system comprises:
      1. A conveying surface (which in the present embodiment is planar) comprising an inclined surface, wherein the conveying surface is arranged for conveying fish received at the input region from the input region to the plurality of output regions under the influence of gravity and due to an inclination of the inclined surface,
      2. one or more trapdoors (140), wherein the one or more trapdoors are arranged in the inclined surface, wherein the conveying system is arranged to convey fish received at the input region to the one or more trapdoors, and wherein the conveying system is arranged so that the configuration of the one or more trapdoors determines which output region the fish are conveyed to,
- A controller (not shown in the figures), wherein the controller is arranged for controlling the configuration of the one or more trapdoors,
wherein the gutting machine and the infeed system is arranged relative to each other so that for each gutting device, there is an output region arranged for providing fish to an input end of the conveying arrangement of said gutting device.

In the present embodiment, which comprises only a single trapdoor 140, the trapdoor presents an inclined face in a closed configuration (which inclined face is flush with the remainder of the conveying surface being an inclined surface), wherein said inclined face in the closed configuration is arranged for supporting and/or conveying fish towards a downstream output region.

The trapdoor 140 is furthermore arranged so that a fish can be positioned on the trapdoor when the trapdoor is in a closed configuration, and so that changing a configuration of the trapdoor from a closed configuration to an open configuration entails conveying a fish originally position on the trapdoor in the original closed configuration, is led through the trapdoor upon opening (and in the present embodiment to an input end of a conveying arrangement 122a of a first gutting device 120a).

An output region is given by a downstream end of the infeed system wherein the downstream end is arranged so that fish can slide over the edge of the downstream end and be driven by gravity to be brought to an input end of a conveying arrangement 122b of a second gutting device 120b.

The gutting system 100 comprises four gates 142a-d, wherein each gate is controllable by the controller so as to be in an open configuration or a closed configuration, wherein
- in the closed configuration the gate is blocking fish being supported by the inclined surface of the infeed system from passing the gate, and
- in an open configuration the gate is allowing fish being supported by the inclined surface of the infeed system to pass the gate.

The second gate 142b is arranged at the trapdoor 140 so that when a fish is blocked from passing the gate by the gate being in a closed configuration, the fish is positioned at said trapdoor so that it can pass through the trapdoor if the trapdoor is in an open configuration and/or changes from a closed configuration to an open configuration.

The first gate 142a and the third gate 142c are arranged, respectively, upstream and downstream of the trapdoor 140 so that when a fish is blocked from passing such a gate by such a gate being in a closed configuration, the fish is not positioned at the trapdoor 140 (i.e., it is not positioned at the trapdoor 140 so that it can pass through the trapdoor even if the trapdoor is in an open configuration). In other words, when a fish is blocked from passing either of gate 142a or 142c, it will not drop though the trapdoor 140, even if the trapdoor is in an open configuration.

A fourth gate 142d is placed upstream of the trapdoor 140 (and downstream of the first gate 142a).

Thus, each of the first gate 142a and the fourth gate 142d is arranged upstream of the trapdoor 140 so that when a fish is blocked from passing the first gate by the first gate being in a closed configuration, the fish is positioned upstream with respect to the first trapdoor, such as in the sense that it cannot pass through the first trapdoor even if the first trapdoor is in an open configuration, the second gate 142b is arranged at the trapdoor 140 so that when a fish is blocked from passing the second gate by the second gate being in a closed configuration, the fish is positioned at the first trapdoor, so that it can pass through the first trapdoor if the first trapdoor is in an open configuration, and the third gate 142c is arranged downstream of the trapdoor 140 so that when a fish is blocked from passing the third gate by the third gate being in a closed configuration, the fish is positioned downstream with respect to the first trapdoor, such as in the sense that it cannot pass through the first trapdoor even if the first trapdoor is in an open configuration.

A conveying direction 144 (being parallel with an x-direction) of each conveying arrangement is arranged for being anti-parallel, with a longitudinal axis of the fish, i.e., the fish is being conveyed in a caudal direction and/or with tail first.

A conveying direction 146 of the conveying system, is arranged for being non-parallel with a longitudinal axis of the fish, such as wherein a smallest angle between a longitudinal angle of the fish being ca. 80°. The angle may be less than 90°, such as less than 85°. An advantage of the angle being less than 90° may be that it enables utilizing gravity for aligning the fish (also) in a direction orthogonal to a conveying direction (such as allowing the fish to slide slightly along their longitudinal axis as well).

The two gutting devices 120a-b substantially encircled by a single cabinet 148 and mounted on a single frame 150.

FIG. 2 shows an end view of the infeed system and furthermore shows the fish 152 lying in a supine position with tail first (pointing in conveying direction x) in an input end of a conveying arrangement 122a of a first gutting device 120a.

A fish 152 can be seen lying in an input end of a conveying arrangement 122a of a first gutting device 120a.

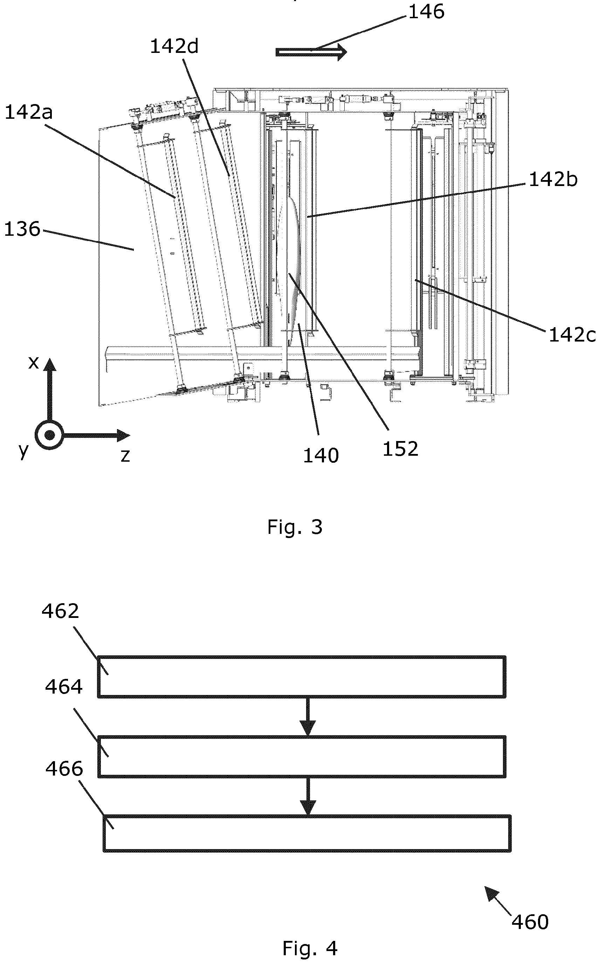

FIG. 3 shows a top view of the infeed system and furthermore shows the fish 152 as observable through the trapdoor 140 (not visible due to the trapdoor being in the open configuration).

FIG. 4 shows a flow-chart illustrating a method 460 for gutting fish, optionally by means of the gutting system 100 depicted in FIGs. 1-3, said method comprising:
- Providing 462 fish at an input region of an infeed system for a gutting system,
- Conveying 464 the fish by means of gravity via an inclined surface of the infeed system to a trapdoor of the infeed system,
- Controlling 466 a configuration of the trapdoor so as to determine
   i. if the trapdoor is in an open configuration so that the fish goes through the trapdoor to a conveying arrangement of a first gutting device of the gutting system, whereafter the method is further comprising gutting the fish on the conveying arrangement of the first gutting device with a gutting arrangement of the first gutting device, or
   ii. if the trapdoor is in an closed configuration so that the fish passes the trapdoor and is conveyed via an the inclined surface of the infeed system to a conveying arrangement of a second gutting device of the gutting system, whereafter the method is further comprising gutting the fish on the conveying arrangement of the second gutting device with a gutting arrangement of the second gutting device.

To sum up, there is presented a gutting system 100 comprising a dual gutting device 110 and an infeed system 130 for the dual gutting device comprising a fish input region 132, a plurality of fish output regions 134a-b, a conveying system 136 for conveying fish from the input region to the plurality of output regions, wherein the conveying system comprises a conveying surface 138 comprising an inclined surface arranged for conveying fish received at the input region, one or more trapdoors 140 arranged in the inclined surface, wherein the conveying system is arranged to convey fish received at the input region to the one or more trapdoors, and wherein the conveying system is arranged so that the configuration of the one or more trapdoors determines which output region the fish are conveyed to, the system furthermore comprising a controller arranged for controlling the configuration of the one or more trapdoors, wherein the dual gutting device and the infeed system is arranged so that for each gutting device, there is an output region arranged for providing fish to the conveying arrangement of said gutting device, such as to an input end of the conveying arrangement of said gutting device. There is furthermore presented a corresponding method and use.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A gutting system (100), wherein the gutting system comprises:
a. a gutting machine (110), wherein the gutting machine comprises a plurality of gutting devices (120a-b), each gutting device being arranged for gutting fish and comprising:
i. a conveying arrangement (122a-b), wherein the conveying arrangement is arranged for conveying fish,
ii. a gutting arrangement (124), wherein the gutting arrangement is arranged for gutting fish conveyed by the conveying arrangement,
b. an infeed system (130) for the gutting machine, wherein the infeed system comprises:
i. an input region (132), wherein fish can be provided to the infeed system,
ii. a plurality of output regions (134a-b), wherein at each output region, fish, which has been received at the input region of the infeed system, can be provided from the infeed system,
iii. a conveying system (136) for conveying fish from the input region to the plurality of output regions, wherein the conveying system comprises:
1. a conveying surface (138) comprising an inclined surface, wherein the conveying surface is arranged for conveying fish received at the input region, such as under the influence of gravity and due to an inclination of the inclined surface, such as conveying fish from the input region to the plurality of output regions,
2. one or more trapdoors (140), wherein the one or more trapdoors are arranged in the inclined surface, wherein the conveying system is arranged to convey fish received at the input region to the one or more trapdoors, and wherein the conveying system is arranged so that the configuration of the one or more trapdoors determines which output region the fish are conveyed to,
c. a controller, wherein the controller is arranged for controlling the configuration of the one or more trapdoors,
wherein the gutting machine and the infeed system are arranged, such as arranged relative to each other, so that for each gutting device, there is an output region arranged for providing fish to the conveying arrangement of said gutting device, such as to an input end of the conveying arrangement of said gutting device.

2. A gutting system (100) according to claim 1, wherein at least one trapdoor (140) presents an inclined face in a closed configuration, wherein said inclined face in the closed configuration is arranged for supporting and/or conveying fish, such as conveying fish towards a downstream output region.

3. A gutting system (100) according to any of the preceding claims, wherein at least one trapdoor (140) is arranged so that a fish can be positioned on the trapdoor when the trapdoor is in a closed configuration, and so that changing the configuration of the trapdoor from a closed configuration to an open configuration entails conveying the fish through the trapdoor.

4. A gutting system (100) according to any of the preceding claims, wherein the infeed system comprises at least two trapdoors and three output regions including:
a. a first output region arranged for providing fish to a conveying arrangement of a first gutting device, and
b. a second output region arranged for providing fish to a conveying arrangement of a second gutting device.

5. A gutting system (100) according to claim 4, wherein the at least three output regions are further comprising:
a. a third output region arranged for providing fish at a region external to the gutting machine, such as a region for rejected fish and/or for fish to be recirculated, such as for providing fish into a reject device or into the infeed system, such as into a reject bin or onto a reject conveyor or back into the infeed system.

6. A gutting system (100) according to any of the preceding claims, wherein an output region is given by a downstream end of the infeed system, such as wherein the downstream end is arranged so that fish can slide over the edge of the downstream end and be driven by gravity to be brought to a conveying arrangement, such as an input end of said conveying arrangement.

7. A gutting system (100) according to any of the preceding claims, wherein the infeed system comprises one or more gates (142a-d), wherein each gate is controllable by the controller so as to be in an open configuration or a closed configuration, wherein
a. in the closed configuration the gate is blocking fish being supported by the inclined surface of the infeed system from passing the gate, and
b. in an open configuration the gate is allowing fish being supported by the inclined surface of the infeed system to pass the gate.

8. A gutting system (100) according to claim 7, wherein one or more gates within the one or more gates are each arranged at a trapdoor, such as at each trapdoor, so that when a fish is blocked from passing such a gate by such a gate being in a closed configuration, the fish is positioned at said trapdoor so that it can pass through the trapdoor if the trapdoor is in an open configuration and/or changes from a closed configuration to an open configuration.

9. A gutting system (100) according to any of claims 7 or 8, wherein one or more gates within the one or more gates are arranged upstream and/or downstream of a trapdoor, such as at each trapdoor, so that when a fish is blocked from passing such a gate by such a gate being in a closed configuration, the fish is not positioned at the trapdoor, such as in the sense that it can pass through the trapdoor even if the trapdoor is in an open configuration.

10. A gutting system (100) according to any of claims 7-9, wherein the one or more gates comprise:
a. a first gate (142a) which is arranged upstream of a first trapdoor so that when a fish is blocked from passing the first gate by the first gate being in a closed configuration, the fish is positioned upstream with respect to the first trapdoor, such as in the sense that it cannot pass through the first trapdoor even if the first trapdoor is in an open configuration,
b. a second gate (142b) which is arranged at the first trapdoor so that when a fish is blocked from passing the second gate by the second gate being in a closed configuration, the fish is positioned at the first trapdoor, so that it can pass through the first trapdoor if the first trapdoor is in an open configuration, and
c. a third gate (142c) which is arranged downstream of a first trapdoor so that when a fish is blocked from passing the third gate by the third gate being in a closed configuration, the fish is positioned downstream with respect to the first trapdoor, such as in the sense that it cannot pass through the first trapdoor even if the first trapdoor is in an open configuration.

11. A gutting system (100) according to any of the preceding claims, wherein
a. a conveying direction (144) of each conveying arrangement is arranged for being substantially parallel or anti-parallel, such as parallel or anti-parallel, with a longitudinal axis of the fish.

12. A gutting system (100) according to any of the preceding claims, wherein
a. a conveying direction (146) of the conveying system, is arranged for being non-parallel with a longitudinal axis of the fish, such as wherein a smallest angle between a longitudinal angle of the fish being at least 10°, such as at least 30°, such as at least 45°, such as at least 60°, such as at least 75°, such as at least 80°, such as 90°.

13. A gutting system (100) according to any of the preceding claims, wherein the plurality of gutting devices are substantially encircled, such as substantially enclosed, by a single cabinet (148) and/or mounted on a single frame (150).

14. Use of a gutting system (100) according to any of the preceding claims for gutting fish.

15. A method for gutting fish, optionally by means of a gutting system (100) according to any of claims 1-13, said method comprising:
a. providing fish at an input region of an infeed system for a gutting system,
b. conveying the fish by means of gravity via an inclined surface of the infeed system to a trapdoor of the infeed system,
c. controlling a configuration of the trapdoor so as to determine
i. if the trapdoor is in an open configuration so that the fish goes through the trapdoor to a conveying arrangement of a first gutting device of the gutting system, whereafter the method is further comprising gutting the fish on the conveying arrangement of the first gutting device with a gutting arrangement of the first gutting device, or
ii. if the trapdoor is in a closed configuration so that the fish passes the trapdoor and is conveyed via an inclined surface of the infeed system to a conveying arrangement of a second gutting device of the gutting system, whereafter the method is further comprising gutting the fish on the conveying arrangement of the second gutting device with a gutting arrangement of the second gutting device.
